# EUROPÄISCHE PATENTSCHRIFT

(11) **EP 3 668 304 B1**
(45) Veröffentlichungstag und Bekanntmachung des Hinweises auf die Patenterteilung: **15.12.2021**
(21) Anmeldenummer: 18755185.8
(22) Anmeldetag: 13.08.2018
(51) Int. Cl.: A01G 23/04

(54) **WURZELBALLEN-UNTERSCHNEIDE- UND AUSHEBEGERÄT**
DEVICE FOR UNDERCUTTING AND REMOVING ROOT BALLS
APPAREIL DE COUPE SOUS-JACENTE DE MOTTES RACINAIRES ET DE DÉTERRAGE

(30) Priorität: 16.08.2017 DE 102017214290
(43) Veröffentlichungstag der Anmeldung: 24.06.2020
(73) Patentinhaber: Elsen, Freddy, 25421 Pinneberg (DE)
(72) Erfinder: Elsen, Freddy, 25421 Pinneberg (DE)
(74) Vertreter: Müller Verweyen
(86) Internationale Anmeldenummer: PCT/EP2018/071908
(87) Internationale Veröffentlichungsnummer: WO 2019/034600

(56) Entgegenhaltungen:
- US-A- 3 017 707
- US-A- 3 427 734
- US-A- 3 717 944

## Beschreibung

Die vorliegende Erfindung betrifft ein Wurzelballen-Unterschneide- und Aushebegerät zum Anbau an ein Trägerfahrzeug oder Traggerät zum Unterschneiden und Ausheben von Pflanzen mit Wurzelballen mit wenigstens einem Unterschneidemesser, das auf einer Kreisbahn um eine vertikale Achse rotierbar gelagert ist.

Die Erfindung betrifft weiterhin ein Verfahren, insbesondere für Baumschulen, im Garten- und Landschaftsbau sowie in der Forstwirtschaft zum Unterschneiden und Ausheben von Pflanzen mit Wurzelballen verschiedenen Volumens, wobei eine zumindest manuelle Einstellung des wenigstens einen Unterschneidemessers vorgesehen ist.

Bei bekannten Wurzelballen-Unterschneide- und Aushebegeräten, auch Ballenschneider genannt, sind die Unterschneidemesser stets so dimensioniert, dass die maximale Leistungsfähigkeit des Gerätes ausgenutzt werden kann. Diese Geräte sind entsprechend groß und schwer, was wiederum ein großes Trägerfahrzeug erfordert. Aufgrund der Baugröße müssen zwischen den Bäumen, Koniferen oder Sträuchern große Abstände berücksichtigt werden, was zu einem größeren Flächenbedarf führt, was betriebswirtschaftlich nachteilig ist. Auch ein Bereithalten von Geräten unterschiedlicher Baugröße mit auswechselbaren Formatteilen bedeutet stets einen erheblichen Kosten- und/oder Umrüstaufwand.

In der Offenlegungsschrift DE 43 01 513 A1 wird ein Einzelballen-Aushebe- und Rodegerät beschrieben, das als Anhänger ausgebildet ist oder an einen Auslegerarm eines Anbaubaggerladers angebaut werden kann. Das Gerät weist ein Unterschneidemesser auf, das zum Herausschneiden des Ballens mittels einer zentralen Doppelgelenkdrehverbindung positionierbar ist. Neben der Doppelgelenkdrehverbindung sind hierfür wenigstens drei Hubzylinder erforderlich, so dass das Gerät in seiner Konstruktion sehr aufwendig und störanfällig ist.

Die US-Patentschrift US 5 081 841 offenbart einen Ballenstecher, welcher auch als Spatenmaschine bezeichnet wird. Die dort offenbarte Spatenmaschine umfasst vier an Linearführungen angeordnete Spaten, welche unter einem Winkel in das Erdreich einstechen. Für unterschiedliche Ballengrößen sind dort austauschbare Spatenblätter vorgesehen, dies bedeutet, dass stets vier Spatenblätter auszutauschen sind. Die Spatenblätter sind zur Verwendung als Unterschneidemesser zudem ungeeignet, da vertikale Verstärkungsprofile auf der Rückseite den Widerstand im Erdreich erheblich vergrößern.

In Patentschrift US 3,427,734 ist ein Ballenschneider offenbart, der einen teilkreisförmigen Rahmen aufweist, auf dem Baggerschneiden an gegenüberliegenden Enden montiert sind. Ein Motor bewegt den drehbaren Rahmen mit den Baggerschneiden im Uhrzeigersinn und entgegen den Uhrzeigersinn bis ein vollständiger Ausschnitt erreicht ist.

In der Patentschrift US 3,017,707 ist ein Ballenschneider gezeigt, dessen Öffnung für das Umgreifen eines Stammes mittels eines einsetzbaren Teilstücks für den Betrieb des Ballenschneiders verschlossen wird.

Aus der Patentschrift US 3,717,944 ist ein Ballenschneider bekannt, welcher zunächst einen zylindrischen Schnitt ausführt und anschließend den Ballen unterschneidet.

Ausgehend von diesem Stand der Technik ist es Aufgabe der vorliegenden Erfindung, ein Wurzelballen-Unterschneide- und Aushebegerät bereitzustellen, das universell für unterschiedlich große und unterschiedlich geformte Wurzelballen einsetzbar und dabei schnell und einfach auf eine abweichende Ballengröße und/oder Ballenform einstellbar ist.

Es ist damit einhergehend die Aufgabe der Erfindung ein Verfahren zur Anwendung eines Wurzelballen-Unterschneide- und Aushebegeräts in Baumschulen, im Garten- und Landschaftsbau sowie in der Forstwirtschaft bereitzustellen, welches ein schnelles und einfaches Einstellen auf ein optimales Ballenvolumen und/oder auf verschiedene Ballenformen unterstützt, wobei das Einstellen manuell, bevorzugt werkzeugfrei und/oder halbautomatisch oder automatisch durchgeführt wird.

Die Aufgabe wird gemäß des Anspruchs 1 gelöst durch ein Wurzelballen-Unterschneide- und Aushebegerät zum Anschluss an ein Trägerfahrzeug mit wenigstens einem bogenförmigen Unterschneidemesser, das rotierbar um eine im Wesentlichen vertikalen Drehachse A an einer Bogenführung gelagert ist, wobei die Bogenführung ein, insbesondere bogenförmiges Führungslager und einen bewegbaren bogenförmigen Messerträger umfasst, der von der Drehachse A radial beabstandet antreibbar ist. Das bogenförmige Führungslager bildet somit ein Lagerkranzsegment und der bogenförmige Messerträger bildet quasi das zugehörige Drehkranzsegment, wobei der bogenförmige Messerträger bzw. das Drehkranzsegment innenseitig oder außenseitig des Führungslagers bzw. des Lagerkranzsegments bezogen auf die Drehachse A gelagert sein kann. Die Drehachse A ist während des bestimmungs-gemäßen Gebrauchs des Wurzelballen-Unterschneide- und Aushebegerät im Wesentlichen senkrecht zur Geländeoberfläche ausgerichtet. Hiermit ist gegenüber einem zentral angetriebenen Wurzelballen-Unterschneide- und/oder Aushebegerät der große Vorteil verbunden, dass der Raum oberhalb der Unterschneidemesser für die Pflanze frei ist bzw. nicht durch Antriebsmittel verbaut ist.

Der bogenförmige Messerträger weist bevorzugt eine Bogenlänge auf, die im Bereich von 1/2 d2 × π bis 5/6 d2 × π liegt und besonders bevorzugt 3/4 d2 × π beträgt. Mit anderen Worten bildet der Messerträger in einer Draufsicht ein Kreisringsegment. Die Länge des bogenförmigen Messerträgers kann auch geringer als Pi (π) x d2/2 und zum Halten einer Messerführung geeignet sein.

Das bevorzugt bogenförmige Führungslager weist insbesondere eine Bogenlänge auf, die im Bereich von 1/6 d1 × π bis 5/6 d1 × π liegt und bevorzugt 3/4 d1 × π beträgt. Die Länge des Führungslagers kann aber auch geringer als Pi (π) x d1/6 sein und zur Lagerung eines bogenförmigen Messerträgers geeignet sein.

Das Führungslager kann einen ovalen, kreisförmigen, polygonalen, insbesondere rechteckförmigen Querschnitt aufweisen. Das Wurzelballen-Unterschneide- und Aushebegerät gemäß der Erfindung zeichnet sich somit durch eine klare Struktur und eine robuste Konstruktion aus.

Das Führungslager kann einteilig oder mehrteilig ausgebildet sein, beispielsweise kann es eine obere kreisringförmige Deckplatte und eine kreisringförmige Bodenplatte aufweisen, die durch Distanzelemente miteinander lösbar verbunden sind.

In einer weiteren mehrteiligen Ausgestaltung ist das Führungslager horizontal geteilt und weist eine eher geringe Bogenlänge auf, nämlich etwa 1/12 d1 x Pi bis 1/6 d1 x Pi. Das Führungslager weist zwei übereinander angeordnete Rollenlager auf. Das erfindungsgemäße Wurzelballen-Unterschneide- und Aushebegerät weist in dieser Ausgestaltung zudem abweichend zwei bogenförmige Messerträger mit einer Bogenlänge von Pi x d2/2, wobei die bogenförmige Messerträger ebenfalls übereinander angeordnet und an den übereinander angeordneten Rollenlagern gelagert sind.

In einer dritten mehrteiligen Ausgestaltung ist das Führungslager vertikal geteilt und besteht aus zwei Kreisringsegmenten mit einer Bogenlänge von jeweils Pi (π) x d1/2, welche durch ein gemeinsames Scharnier miteinander verbunden sind, wobei die Scharnierachse parallel zur Drehachse A verläuft, sodass im geschlossenen Zustand ein 360°-Kreisring gebildet ist.

In einer besonders bevorzugten Weiterbildung umfasst das bogenförmige Führungslager ein Rollenlager, auf dem der bogenförmige Messerträger beweglich gelagert ist, wobei das Rollenlager ein- oder mehrreihig ausgebildet sein kann und eine Mehrzahl von Rotationskörpern aufweist, die insbesondere als Zylinder-, Kegel-, Schräg- oder Fassrollen ausgebildet sein können. Es können jedoch auch Kugeln in mehrreihiger Anordnung zum beweglichen Lagern des Messerträgers oder der Messerträger vorgesehen sein. Der Aufbau der Hauptkomponente des Wurzelballen-Unterschneide- und Aushebegeräts, nämlich die Bogenführung ist prinzipiell mit einem Kugellager vergleichbar, wobei das bogenförmige Führungslager quasi den (unterbrochenen) Außenring und der bogenförmige Messerträger den (unterbrochenen) Innenring eines Kugellagers bildet.

Gemäß der Erfindung weist die Bogenführung wenigstens einen Antrieb zum Antreiben des bogenförmigen Messerträgers auf, wobei jeder Antrieb einen Motor, ein erstes Antriebselement und ein zweites Antriebselement umfasst. Der Motor mit dem verbundenen ersten Antriebselement ist an dem bogenförmigen Führungslager gehaltert und das zweite Antriebselement ist an dem bogenförmigen Messerträger angeordnet. Das erste Antriebselement ist vorzugsweise als Zahnrad ausgebildet und das zweite Antriebselement ist als bogenförmige Zahnstange oder als bogenförmig geführte Rollenkette ausgebildet, wobei das erste Antriebselement und der Motor durch eine Antriebswelle, bevorzugt eine Gelenkwelle miteinander verbunden sind. Der Motor ist bevorzugt als Hydraulikmotor ausgebildet. Hierdurch sind eine besonders robuste Ausgestaltung und eine einfache Anschlussmöglichkeit an ein Trägerfahrzeug geschaffen. Für einen, insbesondere ölfreien Betrieb des Wurzelballen-Unterschneide- und Aushebegeräts kann alternativ ein Elektromotor vorgesehen sein.

In einer vorteilhaften Weiterbildung ist an dem bogenförmigen Messerträger, zum Führen und Fixieren des Unterschneidemessers, wenigstens eine Messerführung angeordnet, wobei vorzugsweise in der und/oder an der Messerführung mindestens ein Führungsmittel, beispielsweise in Form einer Rolle und/oder eines Gleitstücks entlang einer Führungsbahn Y, Y' gelagert ist oder sind. Weiterhin kann wenigstens ein Fixierelement, beispielsweise in Form eines Bremsklotzes entlang einer Führungsbahn Y, Y' beweglich gelagert sein. Die Führungsbahn Y, Y' kann zumindest abschnittsweise konkav ausgebildet sein. Auch kann in vorteilhafter Weise vorgesehen sein, dass der Abstand und/oder der Winkel der Messerführung relativ zum bogenförmigen Messerträger veränderbar ist oder sind.

In einer weiteren vorteilhaften Weiterbildung ist an dem bogenförmigen Messerträger benachbart zur oder an der Messerführung ein Positionierantrieb, insbesondere ein hydraulischer oder ein elektrischer Positionierantrieb zum Bewegen und Positionieren des Unterschneidemessers entlang der Führungsbahn Y, Y' gehaltert.

Hierdurch ist eine kostengünstige und robuste Bauart sichergestellt. In einer alternativen Weiterbildung kann an Stelle eines Hydraulikzylinders oder Hydraulikmotors auch ein Elektromotor oder Elektrozylinder, ggf. in Kombination mit einem Ritzel-, Zahnstangen- oder Kettenantrieb vorgesehen sein.

Eine bevorzugte Weiterbildung ist dadurch gekennzeichnet, dass die Messerführung entlang einer Linearachse X, X' bewegbar und/oder positionierbar gelagert ist, wobei die Linearachse X, X' quer durch die Drehachse A verläuft und wobei der radiale Abstand der Messerführung zum Messerträger durch wenigstens ein Distanzelement und/oder einen Stellantrieb veränderbar ist.

Eine besonders bevorzugte Weiterbildung ist dadurch gekennzeichnet, dass die oder jede Messerführung um eine Schwenkachse B, B' schwenk- und/oder neigbar gelagert ist, wobei die Schwenkachse B, B' sowohl quer zur Linearachse X, X' als auch quer zur Drehachse A verläuft. Der Winkel der Messerführung zum Messerträger ist zudem, insbesondere durch Distanzelemente und/oder wenigstens einen Stellantrieb veränderbar.

Schließlich kann die oder jede Messerführung um eine Schwenkachse C, C' schwenkbar gelagert sein, wobei die Schwenkachse C, C' mit der Linearachse X, X' zusammenfällt bzw. auf der Linearachse X, X' liegt und somit quer zur Schwenkachse B, B' und ebenfalls quer zur Drehachse A verläuft.

Der Klarheit halber sei an dieser Stelle darauf hingewiesen, dass die genannten Achsen A, B, B', C, C', X, X' virtuelle Achsen sind.

In einer bevorzugten Ausgestaltung sind an dem bogenförmigen Führungslager zwei Motoren gehaltert und wenigstens zwei Zahnräder gelagert, die derart angeordnet und ausgebildet sind, dass der bogenförmige Messerträger mit der daran gehalterten Messerführung nebst Unterschneidemesser auf einer Kreisbahn mehrfach um die Drehachse A umlaufen kann. Mit anderen Worten sind in jeder Position des bogenförmigen Messerträgers ein Motor und ein Zahnrad mit der Zahnstange bzw. der Rollenkette im Eingriff. Das oder die Unterschneidemesser wirken wie ein Kreisschneider. Hiermit ist der Vorteil verbunden, dass während der Rotation des Messerträgers nebst Messerführung und Unterschneidemesser stets jederzeit d. h wenigstens ein Antrieb im Eingriff ist.

In einer nicht-erfindungsgemäßen Ausgestaltung sind an dem Führungslager lediglich ein Motor gehaltert und wenigstens zwei Zahnräder gelagert, die über zwei Gelenkwellen und einem Verteilergetriebe mit dem Motor verbunden sind, so dass der bogenförmige Messerträger mittels der bogenförmigen Zahnstange und mit den Unterschneidemessern mehrfach um die Drehachse A umlaufen können. Hiermit ist ebenfalls der Vorteil verbunden, dass jederzeit d. h. in jeder Position des bogenförmigen Messerträgers der Motor mit einem Zahnrad mit der Zahnstange bzw. der Rollenkette im Eingriff ist.

In einer besonders bevorzugten Ausgestaltung der Erfindung weist das Wurzelballen-Unterschneide- und Aushebegerät ein erstes Unterschneidemesser und ein zweites Unterschneidemesser auf, welche jeweils in einer zugeordneten ersten und zweiten Messerführung gelagert sind, wobei die erste Messerführung und die zweite Messerführung auf einer Linearachse X, X' einander gegenüberliegend an dem bewegbaren bogenförmigen Messerträger gehaltert sind, wobei die Linearachse X, X' quer durch die Drehachse A verläuft. Mit anderen Worten schneidet die Linearachse X, X' die Drehachse A in einem rechten Winkel. Die Achse X, X' verläuft dabei im Wesentlichen parallel zur Geländeoberfläche.

Besonders bevorzugt sind an dem bogenförmigen Messerträger wenigstens zwei Verstelleinrichtungen gehaltert, die ausgebildet und eingerichtet sind, die jeweils verbundene Messerführung um eine Schwenkachse B, B' mittels eines Distanzelements oder mehrerer Distanzelemente und/oder eines Stellantriebs zu neigen und/oder insbesondere linear entlang der Linearachse X, X' auf die Drehachse A zu und von der Drehachse A weg zu positionieren. Hierdurch sind die Abstände und/oder die Winkel der Unterschneidemesser mit den Messerführungen auch separat veränderbar, somit ist eine einfache Einstellmöglichkeit der Unterschneidemesser auf eine vorbestimmte Wurzelballengröße und/oder Wurzelballenform gegeben.

Eine weitere vorteilhafte Fortbildung des Wurzelballen-Unterschneide- und Aushebegeräts zeichnet sich dadurch aus, dass an der Bogenführung, insbesondere zum Einstellen eines vorbestimmten Abstands zur Geländeoberfläche, wenigstens eine, vorzugsweise zwei Bodenplatten, die an längenveränderbare Stützen angeordnet sind, gehaltert sind. Die Stützen sind mechanisch einstellbar und arretierbar und/oder weisen bevorzugt jeweils einen Hydraulikzylinder auf, der entsprechend des gewünschten Abstands ausfahrbar und arretierbar ist. Hierdurch ist unabhängig vom jeweiligen Trägerfahrzeug oder Traggerät auf einfache Weise eine reproduzierbare Arbeitshöhe sichergestellt. Zugleich lässt sich hiermit Einfluss auf die Ballengröße nehmen. Die Form der Bodenplatten kann durch Austausch an die jeweiligen Bodenverhältnisse angepasst werden. Im einfachsten Fall sind seitliche tellerförmige Bodenplatten vorgesehen. Besonders bevorzugt sind kreisringsegmentförmige Bodenplatten, die im Wesentlichen mit der Kontur der Bogenführung oder des bogenförmigen Führungslagers übereinstimmen.

Beispielhaft ist jedes Unterschneidemesser in seiner Längserstreckung über seine Breitseite bogenförmig ausgebildet und weist zumindest an einer Schmalseite eine Schneidkante auf. Jedes Unterschneidemesser hat einen flachen widerstandsarmen, insbesondere polygonalen, beispielsweise sechseckigen, rhombischen oder linsenförmigen Querschnitt, wodurch der Widerstand im Erdreich beim Unterschneiden reduziert wird. Auch können die Unterschneidemesser einen linsenförmigen, insbesondere einen konkav-konvex-linsenförmigen Querschnitt, nach Art einer optischen Sammellinse, aufweisen.

Besonders bevorzugt weist jedes Unterschneidemesser an seinen Schmalseiten zwei bogenförmige, voneinander wegweisende, insbesondere parallele Schneidkanten auf. Aufgrund dieser vorteilhaften gleichartigen und symmetrischen Ausbildung sind die Unterschneidemesser untereinander tauschbar, was die Nutzungsdauer deutlich erhöht und die Ersatzteilhaltung erheblich vereinfacht. Weiterhin sind die Unterschneidemesser besonders geeignet, einen Wurzelballen sowohl in einer Vorwärtsbewegung als auch in einer Rückwärtsbewegung zu unterschneiden.

Eine vorteilhafte Ausbildung der Unterschneidemesser ist gekennzeichnet durch einen austauschbaren Messereinsatz, der als bogen-, trapez-, dreieck- oder dornförmige Messerspitze ausgebildet sein kann, sodass im Falle einer Beschädigung der Spitze des Unterschneidemessers, beispielsweise durch im Erdreich befindliche Steine lediglich der Austausch dieses Messereinsatzes erforderlich wäre.

Zum Bewegen des oder jedes Unterschneidemessers in der Messerführung entlang der Bahn Y, Y' weist jedes Unterschneidemesser ein Antriebselement zum Herstellen einer Wirkverbindung mit einem Positionierantrieb auf, wobei das Antriebselement als eine Mehrzahl gleichmäßig beabstandeter Durchbrüche oder Vertiefungen, zum Herstellen einer Wirkverbindung mit einem Zahnrad oder Schneckenwelle ausgebildet und eingerichtet ist. In einer erfindungsgemäßen Abwandlung ist das Antriebselement als flaches oder gabelförmiges Befestigungsauge oder als Befestigungszapfen zum Anschluss eines doppelwirkenden hydraulischen oder elektrischen Stellzylinders ausgebildet.

Für eine sichere form- und kraftschlüssige mechanische Kopplung des Wurzelballen-Unterschneide- und Aushebegeräts mit einem Trägerfahrzeug, bspw. einem Traktor oder Anbaubaggerlader oder einem Traggerät weist das Wurzelballen-Unterschneide- und Aushebegerät einen Träger auf, an welchen zumindest ein Koppelelement, nämlich ein Koppelelement für die mechanische Kopplung vorgesehen ist. Ein weiteres Koppelelement kann für hydraulische Antriebe vorgesehen sein. In einer besonders bevorzugten Weiterbildung weist das Wurzelballen-Unterschneide- und Aushebegerät wenigstens ein drittes Koppelelement in Form einer Steckverbindung für elektrische Steuerungsmittel, insbesondere Magnetventile und Sensoren auf, um diese mit einer Steuerungseinheit zu verbinden. Die Steuerungseinheit umfasst bevorzugt eine Bedien- und Anzeigeeinheit und/oder ist mit einer Bedien- und Anzeigeeinheit elektrisch mittels eines Kabels oder drahtlos verbindbar, sodass das Wurzelballen-Unterschneide- und Aushebegerät automatisch auf eine vorgebbare Wurzelballenform und/oder Wurzelballengröße einstellbar ist.

In einer alternativen Weiterbildung umfasst das Wurzelballen-Unterschneide- und Aushebegerät eine lokale Steuerungseinheit, quasi direkt an Bord, wobei diese Steuerungseinheit eine drahtlose Datenschnittstelle zu einer mobilen Bedien- und Anzeigeeinheit aufweisen kann, sodass bspw. eine Bedienung von einem Smartphone, Tablet, Wearable oder Notebook erfolgen kann.

In einer besonders bevorzugten Weiterbildung weist das Wurzelballen-Unterschneide- und Aushebegerät eine Mehrzahl von Sensoren auf, welche als Weg-, Positions-, Entfernungs- und/oder Drucksensoren ausgebildet sein können. Mittels der Sensoren kann bspw. die Entfernung zu einem Stamm oder das Gewicht eines Wurzelballens nebst Pflanze ermittelt werden. Weiterhin können Widerstände im Erdreich beim Unterschneiden des Wurzelballens erkannt werden, womit eine mögliche Überlastung frühzeitig detektiert und mit entsprechenden Stellsignalen darauf reagiert werden kann.

Die Aufgabe wird auch gelöst durch ein Verfahren für Baumschulen, im Garten- und Landschaftsbau sowie in der Forstwirtschaft zum Anbau und/oder Anschluss an ein Trägerfahrzeug oder Traggerät zum Unterschneiden und zum Ausheben von Pflanzen mit Wurzelballen, mit einem Wurzelballen-Unterschneide- und Aushebegerät, gemäß einem der Vorrichtungsansprüche, umfassend eine Bogenführung mit einem bewegbaren bogenförmigen Messerträger und wenigstens ein, vorzugsweise zwei bogenförmige Unterschneidemesser, mit den Schritten,
a) Koppeln des Wurzelballen-Unterschneide- und Aushebegeräts mit einem Trägerfahrzeug oder einem Traggerät,
b) Heranfahren des Wurzelballen-Unterschneide- und Aushebegeräts an die auszuhebende Pflanze, bis die auszuhebende Pflanze im Wesentlichen im Zentrum des bogenförmigen Messerträgers steht,
c) Absenken des Wurzelballen-Unterschneide- und Aushebegeräts, bis die Unterschneidemesser Bodenkontakt haben,
d) Rotieren des oder der Unterschneidemesser um eine im Wesentlichen vertikale Drehachse A, wobei der Schritt d) auch vor dem Schritt c) erfolgen kann,
e) weiteres Absenken der Unterschneidemesser auf eine vorbestimmte Tiefe,
f) weiteres Rotieren des oder der Unterschneidemesser um die im Wesentlichen vertikale Drehachse A,
g) Stoppen der Rotation und des Absenkens der Unterschneidemesser,
h) Anheben des Wurzelballen-Unterschneide- und Aushebegeräts mit der auszuhebenden Pflanze nebst Wurzelballen über die Geländeoberkante und Absetzen oder Abtransportieren der Pflanze nebst Wurzelballen durch das Trägerfahrzeug oder das Traggerät.

In einer bevorzugten Weiterbildung umfasst das Verfahren vor dem Schritt c) die Schritte: Einstellen der Neigung der Unterschneidemesser auf die Tiefe des auszuhebenden Wurzelballens und/oder Einstellen des Abstandes der Unterschneidemesser auf die Breite des auszuhebenden Wurzelballens.

In einer bevorzugten Ausgestaltung weist das Wurzelballen-Unterschneide- und Aushebegerät zwei an der Bogenführung gehalterte, ausfahrbare Stützen und Bodenplatten auf, die auf ein vorbestimmtes Maß zwischen der Bogenführung und Boden bzw. der Geländeoberkante einstellbar sind, sodass nach dem Schritt b) und vor dem Schritt d) die Schritte, Ausfahren der an der Bogenführung gehalterte Stützen und Bodenplatten auf ein vorbestimmtes Maß und Absenken des Unterschneide- und Aushebegeräts bis die Bodenplatten Bodenkontakt haben, erfolgen.

Das Wurzelballen-Unterschneide- und Aushebegerät ist, insbesondere ausgerüstet und eingerichtet, um zwei verschiedene Unterschneidevorgänge durchzuführen, nämlich erstens ein Unterschneidevorgang, bei welchem ein Ausfahren der Unterschneidemesser kontinuierlich während der Rotation der Unterschneidemesser erfolgt und zweitens ein Unterschneidevorgang, bei welchem ein Ausfahren der Unterschneidemesser im Wechsel mit der Rotation, d.h. nach jeder ganzen Umdrehung erfolgt. Somit ist das Verfahren in einer ersten Ausbildung vorteilhaft dadurch gekennzeichnet, dass der Schritt e) - Absenken der Unterschneidemesser auf eine vorbestimmte Tiefe - und der Schritt f) -weiteres Rotieren des oder der Unterschneidemesser um die im Wesentlichen vertikale Drehachse A - gleichzeitig erfolgen.

Somit ist das Verfahren in einer zweiten Ausbildung vorteilhaft dadurch gekennzeichnet, dass der Schritt e) Absenken der Unterschneidemesser auf eine vorbestimmte Tiefe, die zusätzlichen Schritte umfasst,
- Stoppen der Rotation nach Erreichen einer ersten vorbestimmten Tiefe,
- Ausfahren der Unterschneidemesser auf ein erstes vorbestimmtes Maß,
- Rotieren der Unterschneidemesser um die Drehachse A,
- Stoppen der Rotation und Ausfahren der Unterschneidemesser auf ein zweites vorbestimmtes Maß,
- Rotieren der Unterschneidemesser um die Drehachse A,
- Stoppen der Rotation, Ausfahren der Unterschneidemesser auf ein vorbestimmtes Endmaß,
- Rotieren der Unterschneidemesser um die Drehachse A und Stoppen der Rotation nach einer Anzahl vorgegebener Umdrehungen.

Die Erfindung wird im Folgenden anhand bevorzugter Ausführungsformen unter Bezugnahme auf die beigefügten Figuren erläutert. Dabei zeigt
- Fig. 1: eine perspektivische Draufsicht eines Wurzelballen-Unterschneide- und Aushebegeräts gemäß der Erfindung in einer ersten Ausgestaltung in einer ersten Betriebsstellung,
- Fig. 2: eine Vorderansicht des Wurzelballen-Unterschneideund Aushebegeräts aus Fig. 1,
- Fig. 3: eine Draufsicht des Wurzelballen-Unterschneide- und Aushebegeräts aus Fig. 1,
- Fig. 4: eine perspektivische Vorderansicht des Wurzelballen-Unterschneide- und Aushebegeräts gemäß der Erfindung in einer ersten Ausgestaltung in einer zweiten Betriebsstellung,
- Fig. 5: eine perspektivische Draufsicht des Wurzelballen-Unterschneide- und Aushebegeräts aus Fig. 4,
- Fig. 6: eine perspektivische Detailansicht einer Verstelleinrichtung aus Fig.3,
- Fig. 7: eine perspektivische Draufsicht eines Wurzelballen-Unterschneide- und Aushebegeräts gemäß der Erfindung in einer zweiten Ausgestaltung in einer ersten Betriebsstellung,
- Fig. 8: eine perspektivische Seitenansicht des Wurzelballen-Unterschneide- und Aushebegeräts aus Fig. 7,
- Fig. 9: eine Draufsicht des Wurzelballen-Unterschneide- und Aushebegeräts aus Fig. 7,
- Fig. 10: eine perspektivische Detailansicht einer Verstelleinrichtung aus Fig. 7,
- Fig. 11: eine perspektivische Draufsicht eines partiell demontierten Wurzelballen-Unterschneide- und Aushebegeräts aus Fig. 7,
- Fig. 12: eine Detailansicht einer demontierten Rollenkassette aus Fig. 7,
- Fig. 13: eine perspektivische Draufsicht eines Wurzelballen-Unterschneide- und Aushebegeräts gemäß der Erfindung in einer dritten Ausgestaltung,
- Fig. 14: eine perspektivische Teilansicht des Wurzelballen-Unterschneide- und Aushebegeräts aus Fig. 13
- Fig. 15: eine perspektivische Teilsicht eines Wurzelballen-Unterschneide- und Aushebegeräts gemäß der Erfindung in einer vierten Ausgestaltung,
- Fig. 16: eine perspektivische Draufsicht eines Wurzelballen-Unterschneide- und Aushebegeräts gemäß der Erfindung in einer fünften Ausgestaltung,
- Fig. 17: eine Detailansicht eines ersten Unterschneidemessers mit einer Rollenführung einer ersten Art,
- Fig. 18: eine Detailansicht eines zweiten Unterschneidemessers mit einer Rollenführung einer zweiten Art und
- Fig. 19: eine Detailansicht eines dritten Unterschneidemessers mit einer Rollenführung einer dritten Art.

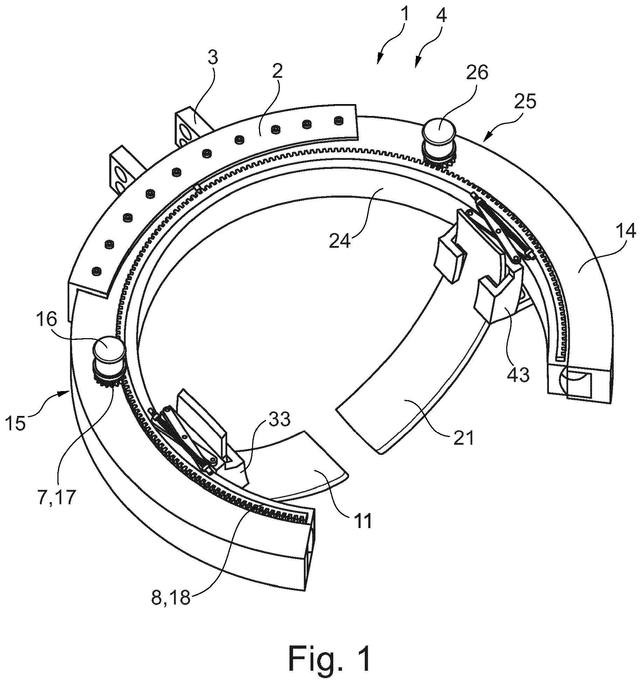

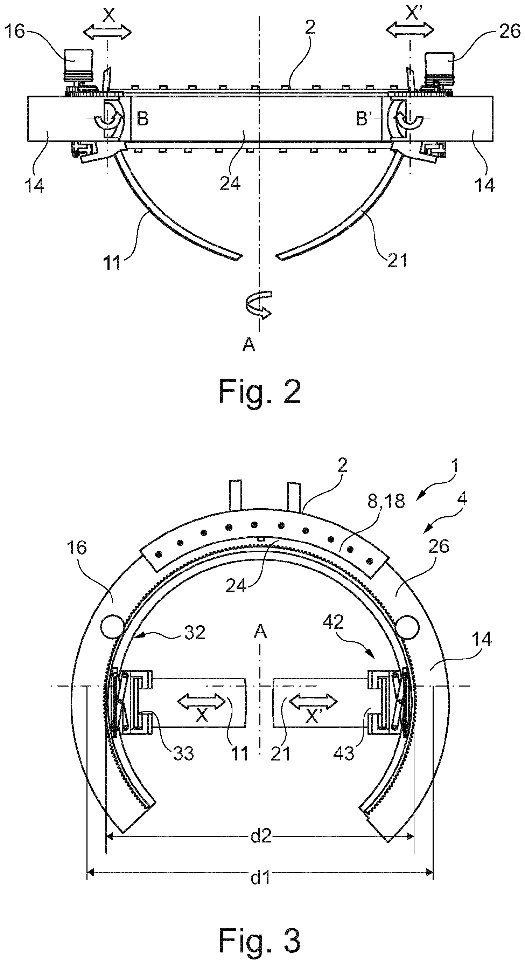

Die Fig. 1 zeigt eine perspektivische Draufsicht, Fig. 2 eine Vorderansicht und Fig. 3 eine Draufsicht eines Wurzelballen-Unterschneide- und Aushebegeräts 1 gemäß der Erfindung in einer ersten Ausgestaltung und in einer ersten Betriebsstellung mit zwei sich gegenüberstehenden bogenförmigen Unterschneidemessern 11, 21. Wie die Fig. 1, 2 und 3 erkennen lassen, sind die Unterschneidemesser 11, 21 um eine Drehachse A gemeinsam rotierbar an einem bewegbaren bogenförmigen Messerträger 24 angeordnet, welcher an einem stationären bogenförmigen Führungslager 14 auf der der Drehachse A zugewandten Seite beweglich gelagert ist. Das bogenförmige Führungslager 14 und der bogenförmige Messerträger 24 bilden eine Bogenführung 4, die mit einem Träger 2 verbunden ist. Am Träger 2 ist ein Koppelelement 3 erkennbar, welches zur mechanischen Kopplung mit einem nicht dargestellten Trägerfahrzeug vorgesehen ist. Der Antrieb des bogenförmigen Messerträgers 24 erfolgt durch zwei auf dem Führungslager 14 symmetrisch um eine quer zur Drehachse A verlaufende Mittelachse angeordnete elektrische oder hydraulische Antriebe 15 und 25. In dem ersten Ausführungsbeispiel umfassen die Antriebe 15, 25 jeweils einen Motor 16, 26 und ein erstes Antriebselement 17, 27, welche jeweils direkt mit dem Motor 16, 26 über eine nicht dargestellte Welle verbunden sind. Die zwei ersten Antriebselemente 17, 27 sind als Zahnräder 7 ausgebildet, die mit einem zweiten Antriebselement 18 in Wirkverbindung stehen. Das zweite Antriebselement 18 ist im Ausführungsbeispiel als bogenförmige Zahnstange 8 ausgebildet und fest mit dem Messerträger 24 verbunden, wodurch sich der Messerträger 24 mit jeder Umdrehung der Motoren 16, 26 um einen bestimmten Winkel entlang des Führungslagers 14 bewegt. Das zweite Antriebselement 18 kann auch als bogenförmig geführte und stationär an dem Führungslager 14 angeordnete Rollenkette ausgebildet sein, die sehr kostengünstig beschaffbar und zudem schnell austauschbar wäre. Wie insbesondere die Fig. 3 erkennen lässt, weist der bogenförmige Messerträger 24 einen kleineren mittleren Durchmesser als das bogenförmige Führungslager 14 auf, wobei die Bogenlängen des Führungslagers 14, des Messerträgers 24 und der Zahnstange 8 im Ausführungsbeispiel ca. 3/4 des jeweiligen Durchmessers mal π (Pi) betragen. Hiermit ist zum einen ein hinreichender Öffnungswinkel von ca. 90° zum Passieren eines Stammes einer auszuhebenden Pflanze und zum anderen eine hohe Steifigkeit der Bogenführung 4 sichergestellt. Aufgrund der erfindungsgemäßen Anordnung der Motoren 16, 26, der ersten Antriebselemente 17, 27 und des zweiten Antriebselements 18 können die an dem Messerträger 24 gehalterten Unterschneidemesser 11, 21 mehrfach auf einer Kreisbahn um die Drehachse A umlaufen und den Öffnungswinkel des Führungslagers 14 von ca. 90° überbrücken.

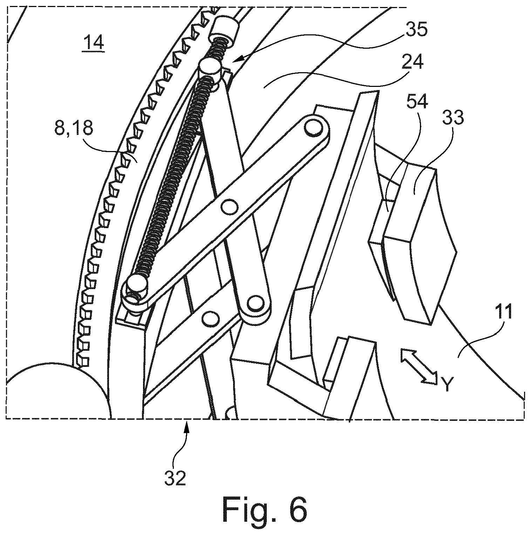

Um das Wurzelballen-Unterschneide- und Aushebegerät 1 sowohl für tiefere als auch flachere Wurzelballen optimal nutzen zu können, d.h. nur so viel Erdreich wie nötig auszuheben, weist das Wurzelballen-Unterschneide- und Aushebegerät zwei Messerführungen 33, 43 auf, die mittels zugeordneter Verstelleinrichtungen 32, 42 in mehreren Achsen verstellbar bzw. einstellbar sind. Zunächst sind die Messerführungen 33, 43 entlang einer Linearachse X, X' bewegbar und/oder positionierbar gelagert, wobei die Linearachse X, X' quer durch die Drehachse A verläuft und wobei der radiale Abstand jeder Messerführung 33, 43 zum Messerträger 24 durch wenigstens ein Distanzelement und/oder einen Stellantrieb 35 auch separat veränderbar ist, was in der Fig. 3 durch Doppelpfeile X, X' dargestellt ist. Hiermit lässt sich vorteilhaft zunächst der gewünschte Ballendurchmesser einstellen. Weiterhin sind die Messerführungen 33, 43 jeweils um eine Schwenkachse B, B' schwenk- und/oder neigbar gelagert, wobei die Schwenkachsen B, B' quer zur Linearachse X, X' verlaufen und die Winkel der Messerführungen 33, 43 zum Messerträger 24 durch Distanzelemente und/oder Stellantriebe 35 veränderbar sind. Die Stellantriebe 35 sind im Ausführungsbeispiel als Spindeltrieb mit einer Scherengittermechanik in zwei Ebenen ausgebildet, wie dies die Fig. 6 im Einzelnen zeigt. Somit ist sowohl eine Bewegung entlang der Linearachse X, X' als auch ein Schwenken bzw. Neigen um die Schwenkachsen B, B' mit den vorgesehenen Verstelleinrichtungen 32, 42 ermöglicht. Durch das Schwenken bzw. Neigen lässt sich insbesondere eine gewünschte Ballentiefe vorteilhaft einstellen.

Die Messerführungen 33, 43 zum Führen und Fixieren der Unterschneidemesser 11, 21 sind im Querschnitt C-förmig ausgebildet und umgreifen die Unterschneidemesser 11, 21. Die Messerführungen 33, 43 weisen mindestens zwei Führungsmittel in Form von insbesondere zylindrischen Führungsrollen und wenigstens ein Fixierelement 54, 64 auf, welche entlang einer Führungsbahn Y, Y' beweglich gelagert sind. Die Fixierelemente 54, 64 setzen das jeweilige Unterschneidemesser 11, 21 während eines Unterschneidevorgangs fest. Das Bewegen der Unterschneidemesser 11, 21 in Längsrichtung entlang der Führungsbahnen Y, Y' kann im einfachsten Fall manuell erfolgen, es kann jedoch jeweils ein hier nicht dargestellter Positionierantrieb zum Bewegen und Positionieren jedes Unterschneidemessers 11, 21 entlang der Führungsbahn Y, Y' gehaltert sein.

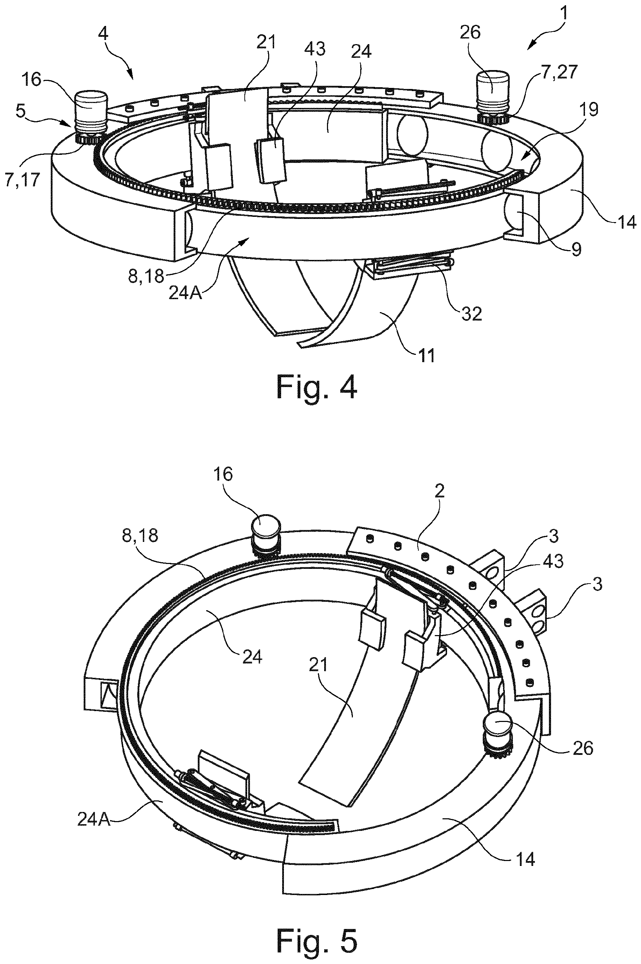

Die Fig. 4 und Fig. 5 zeigen eine perspektivische Vorderansicht bzw. eine perspektivische Draufsicht des Wurzelballen-Unterschneide- und Aushebegeräts 1 gemäß der Erfindung aus Fig. 1 in einer zweiten Betriebsstellung. Der Unterschied gegenüber der ersten Betriebsstellung besteht in der Position des bogenförmigen Messerträgers 24, der dort mit den gehalterten Unterschneidemessern 11, 21 die 90°-Öffnung im Führungslager 14 überbrückt bzw. geschlossen hat. Die Fig. 4 lässt zudem innenseitig an dem Führungslager 14 ein Rollenlager 19 mit fassförmigen Rollen 9 erkennen.

Die Fig. 6 zeigt eine perspektivische Detailansicht einer Verstelleinrichtung aus Fig.3, nämlich die Messerführung 33, die linear bewegbar und schwenk- und/oder neigbar gelagert ist, wobei der Winkel und der Abstand der Messerführung 33 zum Messerträger 24 durch den Stellantrieb 35 veränderbar sind. Der Stellantrieb 35 ist im Ausführungsbeispiel als Spindeltrieb mit einer Scherengittermechanik in zwei Ebenen ausgebildet. Somit ist sowohl eine Bewegung entlang der Linearachse X, X' als auch ein Schwenken bzw. Neigen um die Schwenkachsen B, B' mit der Verstelleinrichtung 32 ermöglicht. Das Fixierelement 54 setzt das Unterschneidemesser 11 - ähnlich einem Bremsklotz einer Scheibenbremse - während eines Unterschneidevorgangs fest.

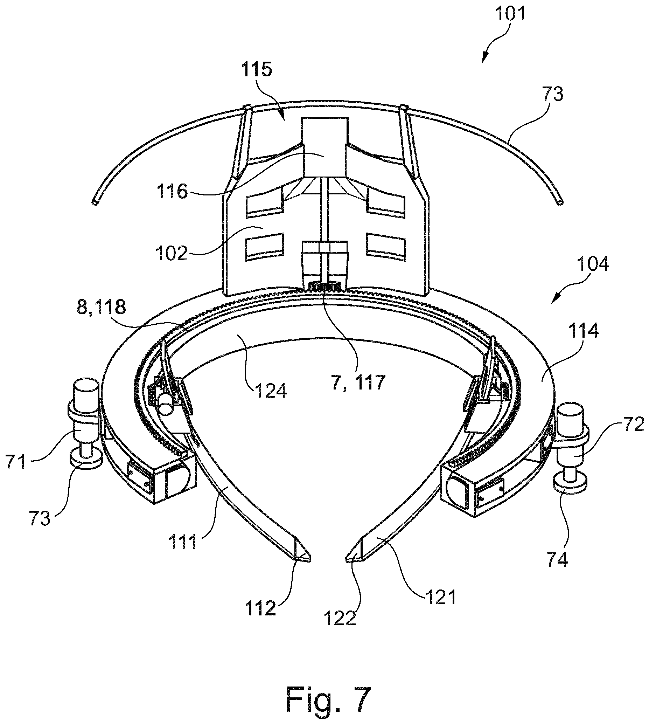

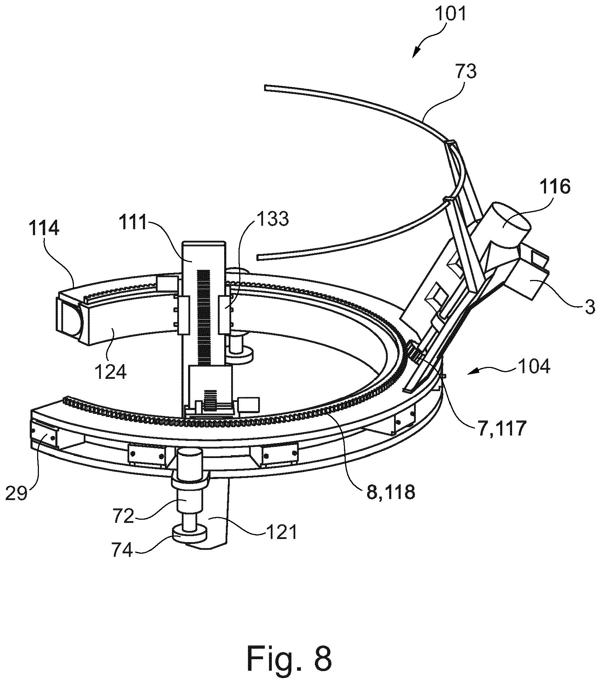

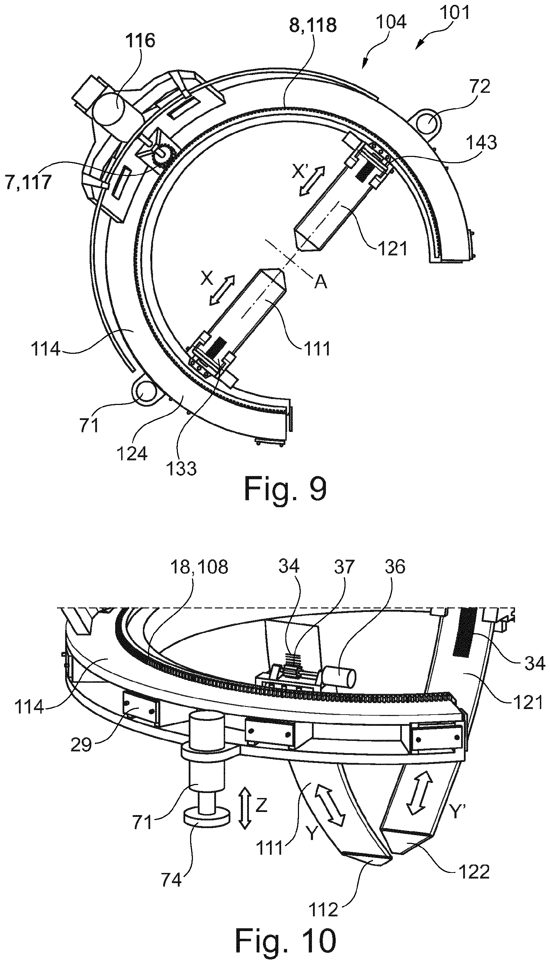

Die Fig. 7 zeigt eine perspektivische Draufsicht von vorn, Fig. 8 eine perspektivische Seitenansicht und Fig. 9 eine Draufsicht eines Wurzelballen-Unterschneide- und Aushebegeräts 101 in einer nicht erfindungsgemäßen Ausgestaltung in einer ersten Betriebsstellung, wobei die Bezugsziffern von funktionsgleichen Teilen um 100 gegenüber der ersten Ausgestaltung des Wurzelballen-Unterschneide- und Aushebegeräts 1 gemäß den Fig. 1 bis 6 erhöht sind. Das Wurzelballen-Unterschneide- und Aushebegerät 101 in der nicht erfindungsgemäßen Ausgestaltung weist ebenfalls zwei sich gegenüberstehende bogenförmige Unterschneidemesser 111, 121 auf, welche gemeinsam um eine Drehachse A rotierbar an einem bewegbaren bogenförmigen Messerträger 124 angeordnet sind, der in einem stationären bogenförmigen Führungslager 114 auf der der Drehachse A zugewandten Seite beweglich gelagert ist. Die bogenförmigen Führungslager 114 und der bogenförmige Messerträger 124 bilden eine Bogenführung 104, die mit einem Träger 102 verbunden ist. Am Träger 102 ist ein Koppelelement 3 erkennbar, welches zur mechanischen Kopplung mit einem nicht dargestellten Trägerfahrzeug vorgesehen ist. Der Antrieb des Messerträgers 124 erfolgt durch einen elektrischen oder hydraulischen Antrieb 115. Im vorliegenden nicht erfindungsgemäßen Ausführungsbeispiel umfasst der Antrieb 115 einen Motor 116 und ein erstes Antriebselement 117 welches über eine Antriebswelle mit dem Motor 116 verbunden ist. Das erste Antriebselement 117 ist als Zahnrad 7 ausgebildet, das mit dem zweiten Antriebselement 118 in Wirkverbindung steht. Das zweite Antriebselement 118 ist wiederum als bogenförmige Zahnstange 8 ausgebildet und fest mit dem Messerträger 124 verbunden, wodurch sich der Messerträger 124 mit jeder Umdrehung des Motors 116 um einen bestimmten Winkel entlang dem Führungslager 114 bewegt. Wie insbesondere die Fig. 9 erkennen lässt, weist der bogenförmige Messerträger 124 wiederum einen kleineren mittleren Durchmesser auf als das bogenförmige Führungslager 114, wobei die Bogenlängen der Führungslager 114, des Messerträgers 124 und der Zahnstange 8 ca. 3/4 des jeweiligen Durchmessers mal π (Pi) betragen. Hiermit ist ein hinreichender Öffnungswinkel von ca. 90° zum Einfahren in eine auszuhebende Pflanze gegeben.

Um das Wurzelballen-Unterschneide- und Aushebegerät 101 sowohl für tiefere als auch flachere Wurzelballen optimal nutzen zu können, d.h. nur so viel Erdreich wie nötig auszuheben, weist das Wurzelballen-Unterschneide- und Aushebegerät 101 zwei Messerführungen 133, 143 auf, die mittels zugeordneter Verstelleinrichtungen 132, 142 in mehreren Achsen verstellbar bzw. einstellbar sind. Zunächst sind die Messerführungen 133, 143 entlang einer Linearachse X, X' bewegbar und/oder positionierbar gelagert, wobei die Linearachse X, X' quer durch die Drehachse A verläuft und wobei der radiale Abstand der Messerführung 133, 143 zum Messerträger 24 jeweils dort durch nicht dargestellte Distanzelemente veränderbar ist, was in Fig. 9 durch die Doppelpfeile X, X' dargestellt ist. Weiterhin können die Messerführungen 133, 143 jeweils um eine Schwenkachse B, B' schwenk- und/oder neigbar gelagert sein.

Die Messerführungen 133, 143 zum Führen und Fixieren der Unterschneidemesser 111, 121 sind im Querschnitt C-förmig ausgebildet und können mindestens zwei Führungsmittel in Form von Rollen 9 umfassen. Das Bewegen gemäß den Doppelpfeilen Y, Y' (vgl. Fig.10) und Positionieren der Unterschneidemesser 111, 121 in Längsrichtung entlang der Führungsbahnen Y, Y' kann im einfachsten Fall manuell erfolgen, im Ausführungsbeispiel sind jedoch Positionierantriebe 36, 46 vorgesehen, wobei die Führungsbahnen Y, Y' in einem einstellbaren spitzen Winkel zur Drehachse A verlaufen.

Wie die Fig. 7 bis 11 weiterhin erkennen lassen, sind an der Bogenführung 104 bzw. an dem Führungslager 114 zwei vertikal ausfahrbare Stützen 71, 72 mit daran gehalterten tellerförmigen Bodenplatten 73, 74 angeordnet. Die Stützen 71, 72 sind mechanisch einstellbar und arretierbar und/oder weisen bevorzugt jeweils einen Hydraulikzylinder auf, der entsprechend des gewünschten Abstands ausfahrbar und arretierbar ist. Hierdurch ist unabhängig vom jeweiligen Trägerfahrzeug auf einfache Weise, eine reproduzierbare Höhe sichergestellt, insbesondere lässt sich hiermit Einfluss auf die Ballengröße nehmen. Die Form der Bodenplatten 73, 74 kann durch Austausch an die jeweiligen Bodenverhältnisse angepasst werden.

Ferner lassen die Fig. 8, 10, 11 und 12 erkennen, dass die Rückseite des bogenförmigen Führungslagers 114 offen ist und dass das Führungslager 114 eine obere und eine untere bogenförmige Platte aufweist. Zwischen der oberen und der unteren bogenförmigen Platte sind am Umfang verteilt eine Mehrzahl von Rollenkassetten 29 angeordnet, in denen jeweils ein Rotationskörper, in Form einer Rolle 9, drehbar gelagert ist. Die in einem Kreisbogen angeordneten Rollenkassetten 29 bilden zusammen mit den Rollen 9 ein Rollenlager 19 für den Messerträger 124.

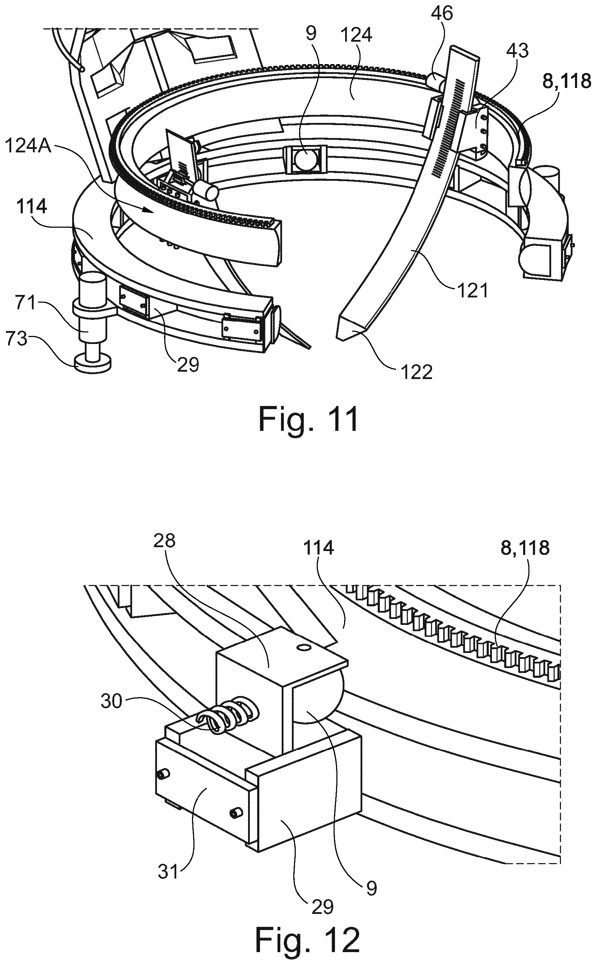

Die Fig. 11 zeigt eine perspektivische Ansicht schräg von oben, eines partiell demontierten Wurzelballen-Unterschneide- und Aushebegeräts, in welcher der bogenförmige Messerträger 124 mit montierten Messerführungen 133, 143 und Unterschneidemessern 11, 121 oberhalb des Führungslagers 114 dargestellt sind. In dieser Darstellung ist eine Lauffläche 124A des Messerträgers 124 erkennbar, auf welcher die Rollen 9 des Führungslagers 114 im montierten und betriebsmäßigen Zustand abrollen.

Die Fig. 12 zeigt eine demontierte Rollenkassette 29, die einen U-förmigen Rollen-halter 27 für die Rolle 9, eine Feder 30 und eine Platte 31 umfasst. Im montieren Zustand stützt sich die Feder 30 an der Platte 31 ab und drückt die Rolle 9 gegen die konkave Lauffläche 124A des Messerträgers 124.

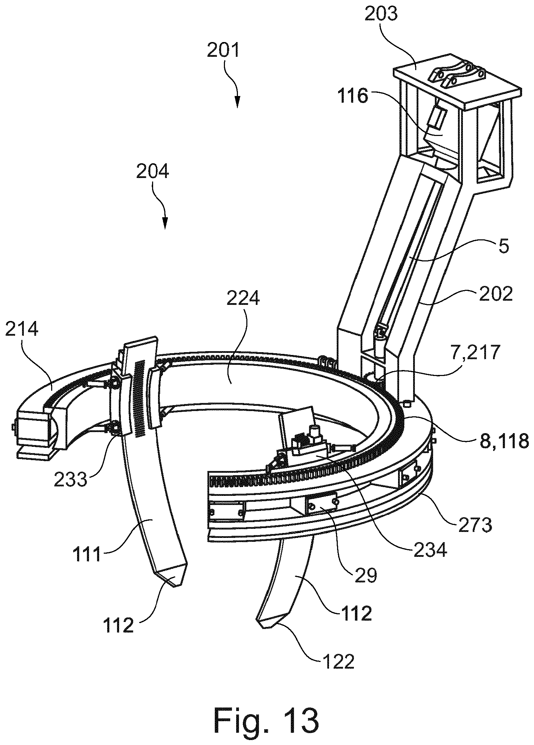

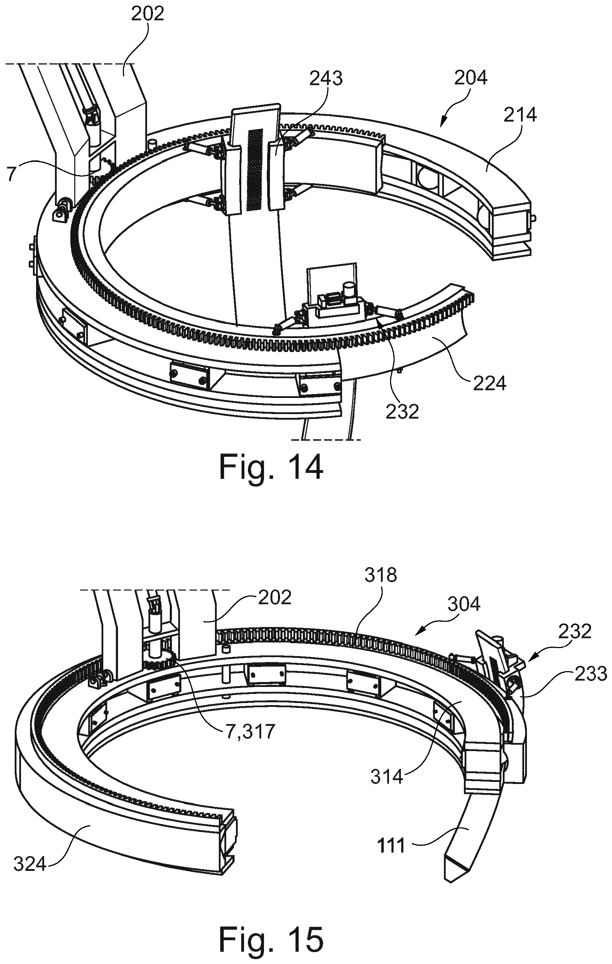

Die Fig. 13 zeigt eine perspektivische Draufsicht eines Wurzelballen-Unterschneide- und Aushebegeräts in einer nicht erfindungsgemäßen Ausgestaltung. Funktionsgleiche aber in der Ausbildung verschiedene Elemente sind gegenüber der ersten Ausführungsform in der Bezugsziffer um 200 erhöht. Der Unterschied zur nicht erfindungsgemäßen Ausgestaltung gemäß Fig. 7 bis 11 besteht somit im Wesentlichen in der Ausgestaltung des Trägers 202, des Antriebs 215, der Verstelleinrichtungen 232, 242 und der Messerführungen 233, 243. Der Träger 202 ist dort zweifach angewinkelt ausgebildet, wobei ein mechanisches Koppelement an der Oberseite angeordnet ist. Der Antrieb 215 umfasst im Ausführungsbeispiel gemäß Fig. 13 einen Motor 116, eine Gelenkwelle 5, ein erstes Antriebselement 217, welches wiederum als Zahnrad 7 ausgebildet ist. Die Fig. 14 zeigt eine perspektivische Teilansicht des Wurzelballen-Unterschneide- und Aushebegeräts aus Fig. 13, welche zusätzlich die Lauffläche 224A des Messerträgers 224 erkennen lässt. Die Verstelleinrichtungen 232, 242 für die Messerführungen 233, 243 sind dort insbesondere durch jeweils vier Kurzhubzylinder realisiert. Somit sind die Messerführungen 233, 243 entlang einer Linearachse X, X' bewegbar und/oder positionierbar, wobei die Linearachse X, X' quer durch die Drehachse A verläuft und wobei der radiale Abstand der Messerführung 233, 243 zum Messerträger 224 jeweils dort durch die Kurzhubzylinder veränderbar ist. Weiterhin sind die Messerführungen 233, 243 bei entsprechender Ansteuerung der Kurzhubzylinder jeweils um eine Schwenkachse B, B' schwenk- und/oder neigbar.

Wie die Fig. 13 und 14 sowie Fig. 16 weiterhin erkennen lassen, ist an der Bogenführung 204 bzw. an dem Führungslager 214 eine Bodenplatte 273 mittels eines nicht dargestellten Antriebs vertikal bewegbar gelagert. Die Bodenplatte 273 ist kreisringsegmentförmig ausgebildet, wobei die äußere Kontur im Wesentlichen mit der Kontur der Bogenführung 204 oder der Kontur des bogenförmigen Führungslagers 214 übereinstimmt, sodass diese sich besonders sicher ohne störende Überstände auf dem Boden abstützen kann. Durch die, in der Höhe einstellbare Bodenplatte 273 lässt sich unabhängig vom jeweiligen Trägerfahrzeug auf einfache Weise eine reproduzierbare Arbeitshöhe sicherstellen.

Die Fig. 15 zeigt eine perspektivische Teilsicht eines Wurzelballen-Unterschneide- und Aushebegeräts 301 in einer nicht erfindungsgemäßen Ausgestaltung. Funktionsgleiche aber in der Ausbildung verschiedene Elemente sind gegenüber der ersten Ausführungsform in der Bezugsziffer um 300 erhöht. Die Unterschiede zur ersten, zweiten und dritten Ausgestaltung bestehen darin, dass diese Ausgestaltung zum einen lediglich ein Unterschneidemesser 111 aufweist, welches in einer Messerführung 333 am Messerträger 324 gehaltert ist. Zum anderen besteht ein wesentlicher Unterschied darin, dass der Messerträger 324 außen am Führungslager 314 gelagert ist.

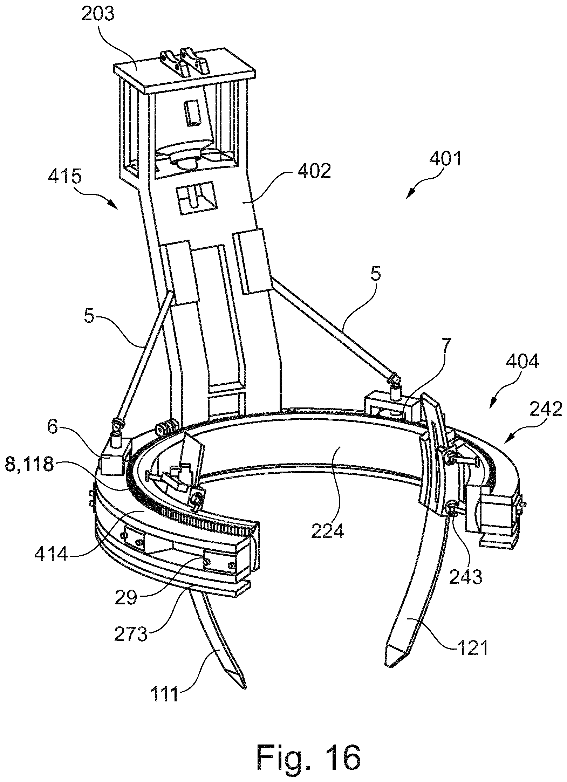

Die Fig. 16 zeigt eine perspektivische Draufsicht eines Wurzelballen-Unterschneide- und Aushebegeräts 401 in einer nicht erfindungsgemäßen Ausgestaltung mit einer Bogenführung 404, einem Führungslager 414, einem Messerträger 424. Funktionsgleiche jedoch in der Ausbildung unterschiedliche Elemente sind gegenüber der ersten Ausführungsform in der Bezugsziffer um 400 erhöht. Der Unterschied zur dritten Ausgestaltung besteht in der Ausgestaltung des Antriebs 415. Der Antrieb 415 umfasst im Ausführungsbeispiel gemäß Fig. 16 einen Motor 116, ein nicht dargestelltes Verteilergetriebe, zwei Gelenkwellen 5 und zwei Getriebe 6, welche zwei erste Antriebselemente 417 mit je einem Zahnrad 7 aufweisen.

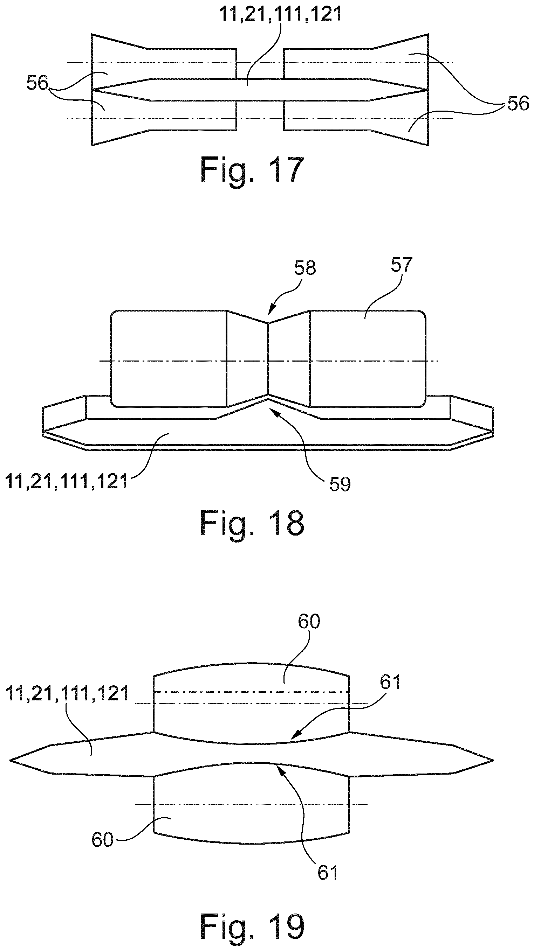

In den Fig. 17, 18 und 19 sind verschiedene weitere Ausbildungen von Führungsrollen 56, 57, 60 zum Führen und Fixieren verschiedener Unterschneidemesser 11, 21, 111, 121 gezeigt, wobei die Führungsrollen 56, 57, 60 auf die flachen Seiten der Unterschneidemesser 11, 21, 111, 121 wirken. Die Fig. 17 zeigt paarweise angeordnete Führungsrollen 56 beidseitig, oberhalb und unterhalb eines Unterschneidemessers 11, 21, 111, 121 mit sechseckigem Querschnitt. Die Fig. 18 zeigt eine Führungsrolle 57 mit einer umlaufenden Ringnut 58, wodurch ein spezielles Unterschneidemesser 11, 21, 111, 121 mit einer mittigen Erhebung 59 zentriert geführt werden kann und fixierbar ist. Die Fig. 19 zeigt zwei ballige Führungsrollen 57, wodurch ein weiteres, speziell geformtes Unterschneidemesser 11, 21, 111, 121 mit einer konkaven Vertiefung 61, mittig geführt und festgesetzt werden kann.

In einer nicht dargestellten sechsten Ausgestaltung weist das Führungslager zwei übereinander angeordnete Rollenlager mit Rotationskörpern auf und hat gegenüber den vorstehend beschriebenem Ausführungsformen (Fig. 1 bis 16) eine kurze Bogenlänge von etwa 1/12 d1 x Pi bis 1/6 d1 x Pi. Das erfindungsgemäße Wurzelballen- Unterschneide- und Aushebegerät weist in dieser Ausgestaltung zudem zwei übereinander angeordnete bogenförmige Messerträger mit einer Bogenlänge von Pi x d2/2 auf, wobei die bogenförmigen Messerträger an den übereinander angeordneten Rollenlagern gelagert sind. Im geschlossenen Zustand bilden die bogenförmigen Messerträger somit einen vollständigen 360°-Kreisring. Im geöffneten Zustand kann ein Öffnungswinkel von 180° erreicht werden, wodurch sich auch eine Pflanze mit einem größeren Durchmesser anfahren lässt.

In einer ebenfalls nicht dargestellten siebten Ausgestaltung ist das Führungslager aus zwei Kreisringsegmenten mit einer Bogenlänge von jeweils Pi x d1/2 gebildet, welche durch ein gemeinsames Scharnier miteinander verbunden sind und wobei die Scharnierachse parallel zur Drehachse A verläuft. Im geschlossenen Zustand bildet das Führungslager somit einen vollständigen 360°-Kreisring. Im geöffneten Zustand kann ein Öffnungswinkel von 180° und mehr erreicht werden, wodurch sich auch eine Pflanze mit einem größeren Durchmesser anfahren lässt. In dieser Ausgestaltung ist das zweite Antriebselement in Form eines Zahnkranzsegmentes an den Führungslagersegmenten angeordnet. Das erste Antriebselement in Form eines Zahnrades ist dagegen mit dem Antriebsmotor auf dem wenigsten einen Messerträger gelagert, wobei der Messerträger in dieser Ausgestaltung kompakt ausgebildet sein kann.

### Bezugsziffernliste:

1, 101, 201, 301, 401 Wurzelballen-Unterschneide- und Aushebegerät,
2, 102, 202, 302, 402 Träger
3, 203 Koppelelement
4, 104, 204, 304, 404 Bogenführung
5 Gelenkwelle
6 Getriebe
7 Zahnrad
8 Zahnstange
9 Rolle
10 frei
11, 111 Unterschneidemesser
12, 112 Messerspitze
14, 114, 214, 314, 414 Führungslager
15, 115, 215, 415 Antrieb
16, 116 Motor
17, 117, 217, 317, 417 erstes Antriebselement
18, 118, 318 zweites Antriebselement
19, 119 Rollenlager
20 frei
21, 121 Unterschneidemesser
22, 122 Messerspitze
24, 124, 224, 324 Messerträger
24A, 124A, 224A Lauffläche
25 Antrieb
26 Motor
27 erstes Antriebselement
28 Rollenhalter
29 Rollenkassette
30 Feder
31 Platte
32, 232 Verstelleinrichtung
33, 133, 233 Messerführung
34 Durchbrüche
45 Stellantrieb
36, 46 Positionierantrieb
37, 47 Stellmotor
42, 242 Verstelleinrichtung
43, 143, 243 Messerführung
45 Stellantrieb
54 Fixierelement
56, 57 Führungsrolle
58 Ringnut
60 Führungsrolle
61 Vertiefung
64 Fixierelement
71, 72 Stütze
73, 74, 273 Bodenplatte
75 Bügel
A Drehachse
B, B' Schwenkachse
C, C' Schwenkachse
X, X' Linearachse
Y, Y' Führungsbahn
Z, Z' Linearachse
d1 mittlerer Durchmesser des Führungslagers
d2 mittlerer Durchmesser des Messerträgers

## Patentansprüche

1. Wurzelballen-Unterschneide- und Aushebegerät (1), insbesondere zum Anbau an ein Trägerfahrzeug oder Traggerät, mit wenigstens einem bogenförmigen Unterschneidemesser (11), das rotierbar um eine im Wesentlichen vertikalen Drehachse A an einer Bogenführung (4) gelagert ist, wobei die Bogenführung (4) ein bogenförmiges Führungslager (14) und einen bewegbaren bogenförmigen Messerträger (24) umfasst, wobei der bogenförmige Messerträger (24) von der Drehachse A radial beabstandet, antreibbar ist, **dadurch gekennzeichnet, dass** an der Bogenführung (4) zwei auf dem Führungslager (14) symmetrisch um eine quer zur Drehachse A verlaufende Mittelachse angeordnete Antriebe (15, 25) zum Antreiben des Messerträgers (24) gehaltert sind, und jeder Antrieb (15, 25) einen Motor (16, 26), wenigstens ein erstes Antriebselement (17, 27) und ein zweites Antriebselement (18) umfasst, wobei der Motor (16, 26) und das wenigstens eine erste Antriebselement (17, 27) an dem Führungslager (14) gelagert sind und das zweite Antriebselement (18) an dem Messerträger (24) angeordnet ist.

2. Gerät nach Anspruch 1, **dadurch gekennzeichnet, dass** das wenigstens eine Unterschneidemesser (11, 21) an dem bogenförmigen Messerträger (24) auf der der Drehachse A zugewandten oder abgewandten Seite gelagert ist.

3. Gerät nach Anspruch 1 oder 2, **dadurch gekennzeichnet, dass** der bogenförmige Messerträger (24) eine Bogenlänge aufweist, die im Bereich von 1/2 d × π bis 5/6 d × π liegt und bevorzugt 3/4 d × π beträgt.

4. Gerät nach einem der Ansprüche 1 bis 3, **dadurch gekennzeichnet, dass** das Führungslager (14) eine Mehrzahl von Rotationskörpern umfasst, auf denen der Messerträger (24) beweglich gelagert ist, wobei die Rotationskörper ein- oder mehrreihig angeordnet sein können.

5. Gerät nach einem der vorangehenden Ansprüche, **dadurch gekennzeichnet, dass** das wenigstens eine erste Antriebselement (17, 27) als Zahnrad (7) ausgebildet ist und dass das zweite Antriebselement (18) als bogenförmige Zahnstange (8), Zahnkranzsegment oder als bogenförmig geführte Rollenkette ausgebildet sein kann.

6. Gerät nach einem der Ansprüche 1 bis 5, **dadurch gekennzeichnet, dass** an dem Messerträger (24) eine Messerführung (33, 43) zum Führen des Unterschneidemessers (11) angeordnet ist.

7. Gerät nach Anspruch 6, **dadurch gekennzeichnet, dass** an dem Messerträger (24) benachbart zur Messerführung (33, 43) ein Positionierantrieb (36, 46) zum Bewegen und Positionieren des Unterschneidemessers (11, 21) entlang der Führungsbahn Y, Y' gehaltert ist, wobei die Führungsbahn Y, Y' in einem spitzen Winkel zur Drehachse A verläuft.

8. Gerät nach Anspruch 6 oder 7, **dadurch gekennzeichnet, dass** die Messerführung (33, 43) entlang einer Linearachse X, X' bewegbar und/oder positionierbar gelagert ist, wobei die Linearachse X, X' quer durch die Drehachse A verläuft und wobei der radiale Abstand der Messerführung (33, 43) zum Messerträger (24) durch wenigstens ein Distanzelement und/oder einen Stellantrieb (35, 45) veränderbar ist.

9. Gerät nach einem der Ansprüche 6 bis 8, **dadurch gekennzeichnet, dass** die Messerführung (33, 43) um eine Schwenkachse B, B' schwenk- und/oder neigbar gelagert ist, wobei die Schwenkachse B, B' quer zur Linearachse X, X' und quer zur Drehachse A verläuft und wobei der Winkel der Messerführung (33, 43) zum Messerträger (24) durch wenigstens ein Distanzelement und/oder einen Stellantrieb (35, 45) veränderbar ist.

10. Gerät nach einem der vorangehenden Ansprüche, **dadurch gekennzeichnet, dass** an dem Messerträger (24) eine Messerführung (33, 43) zum Führen des Unterschneidemessers (11) angeordnet ist, und dass an dem bogenförmigen Führungslager (14) wenigstens ein Motor (16, 26) gehaltert und wenigstens zwei Zahnräder (7) gelagert sind, die derart angeordnet und ausgebildet sind, dass der bogenförmige Messerträger (24) mit der daran gehalterten Messerführung (33, 43) nebst Unterschneidemesser (11, 21) auf einer Kreisbahn größer 360° um die Drehachse A rotierbar ist.

11. Gerät nach einem der vorangegangen Ansprüche, **dadurch gekennzeichnet, dass** das Wurzelballen-Unterschneide- und Aushebegerät (1) ein erstes bogenförmiges Unterschneidemesser (11) und ein zweites bogenförmiges Unterschneidemesser (21) aufweist, welche jeweils in einer zugeordneten ersten und zweiten Messerführung (33, 43) gelagert sind, wobei die erste Messerführung (33) und die zweite Messerführung (43) auf einer Linearachse X, X' einander gegenüberliegend an dem Messerträger (24) gehaltert sind, wobei die Linearachse X, X' quer durch die Drehachse A verläuft.

12. Gerät nach Anspruch 11, **dadurch gekennzeichnet, dass** an dem Messerträger (24) wenigstens zwei Verstelleinrichtungen (32, 42) gehaltert sind, die ausgebildet und eingerichtet sind, die jeweils verbundene Messerführung (33, 43) um eine Schwenkachse B, B' mittels wenigstens eines Distanzelements und/oder eines Stellantriebs (35, 45) zu schwenken und/oder zu neigen und/oder entlang der Linearachse X, X' auf die Drehachse A zu und von der Drehachse A weg zu positionieren, wodurch der Abstand und/oder der Winkel der Messerführungen (33, 43) mit den Unterschneidemessern (11, 21) veränderbar ist oder sind.

13. Gerät nach einem der vorangegangen Ansprüche, **dadurch gekennzeichnet, dass** an der Bogenführung (4) zum Einstellen eines vorbestimmten Abstands zur Geländeoberfläche, wenigstens eine, an längenveränderbare Stützen (71, 72) gehalterte, Bodenplatte (73, 74) angeordnet ist.

14. Gerät nach einem der vorangegangen Ansprüche, **dadurch gekennzeichnet, dass** die Bogenführung (4) mit einem Träger (2) verbunden ist, an dem wenigstens eine Pflanzenhalteeinrichtung, insbesondere in Form eines Bügels (75) lösbar gehaltert ist.

15. Verfahren für Baumschulen, im Garten- und Landschaftsbau sowie in der Forstwirtschaft zum Unterschneiden und Ausheben von Pflanzen mit Wurzelballen mit einem Wurzelballen-Unterschneide- und Aushebegerät (1, 101, 201, 301, 401) nach einem der vorangehenden Ansprüche, umfassend eine Bogenführung (4, 104) mit einer bogenförmigen Messerträger (24, 124, 224, 324) und wenigstens ein bogenförmiges, vorzugsweise zwei bogenförmige Unterschneidemesser (11, 21, 111, 121), **gekennzeichnet durch** die Schritte,
a) Koppeln des Wurzelballen-Unterschneide- und Aushebegeräts (1, 101, 201, 301, 401) mit dem Trägerfahrzeug oder dem Traggerät,
b) Heranführen des Wurzelballen-Unterschneide- und Aushebegeräts (1, 101, 201, 301, 401) an die auszuhebende Pflanze, bis die auszuhebende Pflanze im Wesentlichen im Zentrum des bogenförmigen Messerträgers (24, 124, 224, 324) steht,
c) Absenken des Wurzelballen-Unterschneide- und Aushebegeräts (1, 101, 201, 301, 401) bis das oder die Unterschneidemesser (11, 21, 111, 121) Bodenkontakt hat oder haben,
d) Rotieren des oder der Unterschneidemesser (11, 21, 111, 121) um eine im Wesentlichen vertikale Drehachse A, welche durch den Mittelpunkt des bogenförmigen Messerträgers (24, 124, 224, 324) führt, wobei der Schritt d) auch vor dem Schritt c durchgeführt werden kann,
e) weiteres Absenken der Unterschneidemesser (11, 21, 111, 121) auf eine vorbestimmte Tiefe,
f) weiteres Rotieren des oder der Unterschneidemesser (11, 21, 111, 121) um die Drehachse A,
g) Stoppen der Rotation und des Absenkens der Unterschneidemesser (11, 21, 111, 121),
h) Anheben des Wurzelballen-Unterschneide- und Aushebegeräts (1, 101, 201, 301, 401) mit der auszuhebenden Pflanze nebst Wurzelballen über die Geländeoberkante und Absetzen oder Abtransportieren der Pflanze nebst Wurzelballen durch das Trägerfahrzeug oder das Traggerät.

## Claims

1. Root ball undercutting and excavating device (1), in particular for attachment to a carrier vehicle or carrier device, having at least one arc-shaped undercutting blade (11) which is mounted rotatably about a substantially vertical axis of rotation A on an arc-shaped guide (4), wherein the arc-shaped guide (4) comprises an arc-shaped guide bearing (14) and a movable arc-shaped blade carrier (24), wherein the arc-shaped blade carrier (24) can be driven at a radial distance from the axis of rotation A, **characterized in that** two drives (15, 25) arranged symmetrically on the guide bearing (14) about a central axis extending transversely to the axis of rotation are mounted on the arc-shaped guide (4) for driving the knife carrier (24), and each drive (15, 25) comprises a motor (16, 26), at least one first drive element (17, 27) and a second drive element (18), wherein the motor (16, 26) and the at least one first drive element (17, 27) are mounted on the guide bearing (14) and the second drive element (18) is arranged on the knife carrier (24).

2. Device according to claim 1, **characterized in that** the at least one undercutting knife (11, 21) is mounted on the arc-shaped knife carrier (24) on the side facing or facing away from the axis of rotation A.

3. Device according to claim 1 or 2, **characterized in that** the arc-shaped knife carrier (24) comprises an arc length which is in the range of 1/2 d × π to 5/6 d × π and is preferably 3/4 d × π.

4. Device according to any one of claims 1 to 3, **characterized in that** the guide bearing (14) comprises a plurality of rotating bodies on which the knife carrier (24) is movably mounted, wherein the rotating bodies can be arranged in a single or multiple row.

5. Device according to any one of the preceding claims, **characterized in that** the at least one first drive element (17, 27) is formed as a gear wheel (7) and that the second drive element (18) can be formed as an arc-shaped gear rack (8), gear rim segment or as an arc-shaped guided roller chain.

6. Device according to any one of the claims 1 to 5, **characterized in that** a knife guide (33, 43) for guiding the undercutting knife (11) is arranged on the knife carrier (24) .

7. Device according to claim 6, **characterized in that** a positioning drive (36, 46) for moving and positioning the undercutting knife (11, 21) along the guideway Y, Y' is mounted on the knife carrier (24) adjacent to the knife guide (33, 43), wherein the guideway Y, Y' runs at an sharp angle to the axis of rotation A.

8. Device according to claim 6 or 7, **characterized in that** the knife guide (33, 43) is movably and/or positionably mounted along a linear axis X, X', wherein the linear axis X, X' extends transversely through the axis of rotation A and wherein the radial distance of the knife guide (33, 43) to the knife carrier (24) is variable by at least one distance element and/or an actuator (35, 45).

9. Device according to any one of claims 6 to 8, **characterized in that** the knife guide (33, 43) is pivotably and/or inclinably mounted about a pivot axis B, B', wherein the pivot axis B, B' extends transversely to the linear axis X, X' and transversely to the axis of rotation A and wherein the angle of the knife guide (33, 43) to the knife carrier (24) is variable by at least one spacer element and/or an actuator (35, 45).

10. Device according to any one of the preceding claims, **characterized in that** a knife guide (33, 43) for guiding the undercutting knife (11) is arranged on the knife carrier (24), and **in that** at least one motor (16, 26) and at least two gear wheels (7) are mounted on the arc-shaped guide bearing (14), which gear wheels are arranged and formed in such a way that the arc-shaped knife carrier (24) with the knife guide (33, 43) mounted thereon together with the undercutting knife (11, 21) can be rotated on a circular path greater than 360° about the axis of rotation A.

11. Device according to any one of the preceding claims, **characterized in that** the root ball undercutting and excavating device (1) comprises a first arc-shaped undercutting knife (11) and a second arc-shaped undercutting knife (21), which are each mounted in an associated first and second knife guide (33, 43), wherein the first knife guide (33) and the second knife guide (43) are retained on the knife carrier (24) opposite one another on a linear axis X, X', wherein the linear axis X, X' extends transversely through the axis of rotation A.

12. Device according to claim 11, **characterized in that** at least two adjusting devices (32, 42) are mounted on the knife carrier (24), which are designed and set up to pivot and/or incline the respectively connected knife guide (33, 43) about a pivot axis B, B' by means of at least one spacer element and/or an actuator (35, 45) and/or to position it along the linear axis X, X' towards and away from the axis of rotation A, whereby the distance and/or the angle of the knife guides (33, 43) with the undercutting knives (11, 21) is or are variable.

13. Device according to one of the preceding claims, **characterized in that** at least one base plate (73, 74) retained on length-adjustable supports (71, 72) is arranged on the arc-shaped guide (4) for setting a predetermined distance to the ground surface.

14. Device according to any one of the preceding claims, **characterized in that** the arc-shaped guide (4) is connected to a carrier (2) on which at least one plant holding device, in particular in the form of a bracket (75), is detachably held.

15. Method for tree nurseries, in horticulture and landscaping as well as in forestry for undercutting and excavating plants with root balls with a root ball undercutting and excavating device (1, 101, 201, 301, 401) according to one of the preceding claims, comprising an arc-shaped guide (4, 104) with an arc-shaped knife carrier (24, 124, 224, 324) and at least one arc-shaped, preferably two arc-shaped undercutting knives (11, 21, 111, 121), **characterized by** the steps,
a) coupling the root ball undercutting and excavating device (1, 101, 201, 301, 401) to the carrier vehicle or the carrier device,
(b) approaching the root ball undercutting and excavating device (1, 101, 201, 301, 401) to the plant to be excavated until the plant to be excavated is substantially in the center of the arc-shaped blade carrier (24, 124, 224, 324),
(c) lowering the root ball undercutting and excavating device (1, 101, 201, 301, 401) until the undercutting blade or blades (11, 21, 111, 121) make or make contact with the ground,
d) rotating the undercutting blade or blades (11, 21, 111, 121) about a substantially vertical axis of rotation A passing through the center of the arc-shaped blade carrier (24, 124, 224, 324), wherein step d) may also be performed before step c,
e) further lowering of the undercutting blades (11, 21, 111, 121) to a predetermined depth,
f) further rotating the undercutting knife or knives (11, 21, 111, 121) about the axis of rotation A,
g) stopping the rotation and lowering of the undercutting blade (s) (11, 21, 111, 121),
h) lifting the root ball undercutting and excavating device (1, 101, 201, 301, 401) with the plant to be excavated including the root ball above the upper edge of the ground and depositing or transporting away the plant including the root ball by the carrier vehicle or the carrier device.

## Revendications

1. Appareil de coupe sous-jacente et d'arrachage de mottes racinaires (1), en particulier destiné à être monté sur un véhicule porteur ou un appareil porteur, avec au moins une lame de coupe sous-jacente (11) en forme d'arc, qui est montée sur un guide en arc (4) de manière à pouvoir tourner autour d'un axe de rotation A sensiblement vertical, le guide en arc (4) comprenant un palier de guidage (14) en forme d'arc et un porte-lame (24) mobile en forme d'arc, le porte-lame (24) en forme d'arc pouvant être entraîné à distance radiale de l'axe de rotation A, **caractérisé en ce que** deux entraînements (15, 25) disposés symétriquement sur le palier de guidage (14) autour d'un axe central s'étendant transversalement à l'axe de rotation A sont fixés sur le guide en arc (4) pour l'entraînement du porte-lame (24), et chaque entraînement (15, 25) comprend un moteur (16, 26), au moins un premier élément d'entraînement (17, 27) et un deuxième élément d'entraînement (18), le moteur (16, 26) et ledit au moins un premier élément d'entraînement (17, 27) étant montés sur le palier de guidage (14) et le deuxième élément d'entraînement (18) étant disposé sur le porte-lame (24).

2. Appareil selon la revendication 1, **caractérisé en ce que** ladite au moins une lame de coupe sous-jacente (11, 21) est montée sur le porte-lame (24) en forme d'arc sur le côté tourné vers ou à l'opposé de l'axe de rotation A.

3. Appareil selon la revendication 1 ou 2, **caractérisé en ce que** le porte-lame (24) en forme d'arc présente une longueur d'arc qui se situe dans la plage de ½ d × π à 5/6 d × π et est de préférence ¾ d × π.

4. Appareil selon l'une des revendications 1 à 3, **caractérisé en ce que** le palier de guidage (14) comprend une pluralité de corps de rotation sur lesquels le porte-lame (24) est monté mobile, les corps de rotation pouvant être disposés en une seule rangée ou en plusieurs rangées.

5. Appareil selon l'une des revendications précédentes, **caractérisé en ce que** ledit au moins un premier élément d'entraînement (17, 27) est réalisé sous la forme d'une roue dentée (7) et que le deuxième élément d'entraînement (18) peut être réalisé sous la forme d'une crémaillère (8) en forme d'arc, d'un segment de couronne denté ou d'une chaîne à rouleaux guidée en forme d'arc.

6. Appareil selon l'une des revendications 1 à 5, **caractérisé en ce qu'**un guide-lame (33, 43) pour le guidage de la lame de coupe sous-jacente (11) est disposé sur le porte-lame (24).

7. Appareil selon la revendication 6, **caractérisé en ce qu'**un entraînement de positionnement (36, 46) destiné à déplacer et positionner la lame de coupe sous-jacente (11, 21) le long de la trajectoire de guidage Y, Y' est fixé sur le porte-lame (24) à proximité du guide-lame (33, 43), la trajectoire de guidage Y, Y' s'étendant selon un angle aigu par rapport à l'axe de rotation A.

8. Appareil selon la revendication 6 ou 7, **caractérisé en ce que** le guide-lame (33, 43) est monté mobile et/ou positionnable le long d'un axe linéaire X, X', l'axe linéaire X, X' s'étendant transversalement à l'axe de rotation A et la distance radiale du guide-lame (33, 43) par rapport au porte-lame (24) étant modifiable par au moins un élément d'écartement et/ou un entraînement de réglage (35, 45).

9. Appareil selon l'une des revendications 6 à 8, **caractérisé en ce que** le guide-lame (33, 43) est monté pivotant et/ou inclinable autour d'un axe de pivotement B, B', l'axe de pivotement B, B' s'étendant transversalement à l'axe linéaire X, X' et transversalement à l'axe de rotation A et l'angle du guide-lame (33, 43) par rapport au porte-lame (24) étant modifiable par au moins un élément d'écartement et/ou un entraînement de réglage (35, 45).

10. Appareil selon l'une des revendications précédentes, **caractérisé en ce qu'**un guide-lame (33, 43) pour le guidage de la lame de coupe sous-jacente (11) est disposé sur le porte-lame (24), et que sur le palier de guidage (14) en forme d'arc est fixé au moins un moteur (16, 26) et sont montées au moins deux roues dentées (7) qui sont disposées et conçues de telle sorte que le porte-lame (24) en forme d'arc, sur lequel sont fixés le guide-lame (33, 43) et la lame de coupe sous-jacente (11, 21), peut tourner sur une trajectoire circulaire supérieure à 360° autour de l'axe de rotation A.

11. Appareil selon l'une des revendications précédentes, **caractérisé en ce que** l'appareil de coupe sous-jacente et d'arrachage de mottes racinaires (1) présente une première lame de coupe sous-jacente (11) en forme d'arc et une deuxième lame de coupe sous-jacente (21) en forme d'arc qui sont chacune fixées dans un premier et un deuxième guide-lame (33, 43) associé, le premier guide-lame (33) et le deuxième guide-lame (43) étant fixés sur un axe linéaire X, X' de manière opposée l'un à l'autre sur le porte-lame (24), l'axe linéaire X, X' s'étendant transversalement à l'axe de rotation A.

12. Appareil selon la revendication 11, **caractérisé en ce qu'**au moins deux moyens de réglage (32, 42) sont fixés sur le porte-lame (24), lesquels sont réalisés et conçus pour faire pivoter et/ou incliner le guide-lame (33, 43) respectivement relié autour d'un axe de pivotement B, B' au moyen d'au moins un élément d'écartement et/ou un entraînement de réglage (35, 45) et/ou pour le positionner le long de l'axe linéaire X, X' en le rapprochant et en l'éloignant de l'axe de rotation A, de sorte que la distance et/ou l'angle des guides de lame (33, 43) avec les lames de coupe sous-jacente (11, 21) est ou sont modifiable(s).

13. Appareil selon l'une des revendications précédentes, **caractérisé en ce qu'**au moins une plaque de base (73, 74), qui est fixée sur des pieds réglables en longueur (71, 72), est disposée sur le guide en arc (4) pour régler une distance prédéterminée par rapport à la surface du sol.

14. Appareil selon l'une des revendications précédentes, **caractérisé en ce que** le guide en arc (4) est relié à un support (2) sur lequel est fixé de manière amovible au moins un moyen de maintien de plantes, en particulier sous la forme d'un arceau (75).

15. Procédé pour les pépinières, dans l'horticulture et l'aménagement paysager ainsi que dans la sylviculture pour la coupe sous-jacente et l'arrachage de plantes ayant des mottes racinaires avec un appareil de coupe sous-jacente et d'arrachage de mottes racinaires (1, 101, 201, 301, 401) selon l'une des revendications précédentes, comprenant un guide en arc (4, 104) avec un porte-lame (24, 124, 224, 324) en forme d'arc et au moins une, de préférence deux lames de coupe sous-jacente (11, 21, 111, 121) en forme d'arc, **caractérisé par** les étapes consistant à :
a) accoupler l'appareil de coupe sous-jacente et d'arrachage de mottes racinaires (1, 101, 201, 301, 401) au véhicule porteur ou à l'appareil porteur,
b) approcher l'appareil de coupe sous-jacente et d'arrachage de mottes racinaires (1, 101, 201, 301, 401) de la plante à arracher jusqu'à ce que la plante à arracher soit sensiblement au centre du porte-lame (24, 124, 224, 324) en forme d'arc,
c) abaisser l'appareil de coupe sous-jacente et d'arrachage de mottes racinaires (1, 101, 201, 301, 401) jusqu'à ce que la ou les lames de coupe sous-jacente (11, 21, 111, 121) soient en contact avec le sol,
d) faire tourner la ou les lames de coupe sous-jacente (11, 21, 111, 121) autour d'un axe de rotation A sensiblement vertical passant par le centre du porte-lame (24, 124, 224, 324) en forme d'arc, l'étape d) pouvant également être réalisée avant l'étape c,
e) continuer à abaisser la ou les lames de coupe sous-jacente (11, 21, 111, 121) à une profondeur prédéterminée,
f) continuer à faire tourner la ou les lames de coupe sous-jacente (11, 21, 111, 121) autour de l'axe de rotation A,
g) arrêter la rotation et l'abaissement de la ou des lames de coupe sous-jacente (11, 21, 111, 121),
h) soulever l'appareil de coupe sous-jacente et d'arrachage de mottes racinaires (1, 101, 201, 301, 401) avec la plante à arracher avec la motte racinaire au-dessus du niveau supérieur du sol et déposer ou évacuer la plante avec la motte racinaire à l'aide du véhicule porteur ou de l'appareil porteur.
